# EUROPEAN PATENT APPLICATION

(11) **EP 4 242 610 A1**
(43) Date of publication of application: **13.09.2023**
(21) Application number: 21896513.5
(22) Date of filing: 23.09.2021
(51) Int. Cl.: G01J 5/10, G01J 5/06

(54) **TESTER AND MOBILE TERMINAL**

(30) Priority: 30.11.2020 CN 202011379887
(71) Applicant: Huawei Technologies Co., Ltd., Shenzhen, Guangdong 518129 (CN)
(72) Inventor: DAI, Yufeng, Shenzhen, Guangdong 518129 (CN); WANG, Li, Shenzhen, Guangdong 518129 (CN); WU, Jiajie, Shenzhen, Guangdong 518129 (CN)
(74) Representative: Gill Jennings & Every LLP
(86) International application number: PCT/CN2021/119831
(87) International publication number: WO 2022/111009

(57) **Abstract**

A detector (100) and a mobile terminal are provided. The detector (100) is configured to implement temperature detection. The detector (100) mainly includes a lens (10), a collimator hole (20), and an infrared sensor (30) that are arranged on an optical path. The lens (10) is configured to converge ambient light, and the ambient light includes target area light and another area light. The collimator hole (20) is used to obtain the target area light by screening, and block the another area light. To be specific, the collimator hole (20) is used to screen the incident ambient light, and only the target area light can be irradiated to the infrared sensor (30). The infrared sensor (30) is configured to receive the target area light and block the another area light. A convergence function of the lens (10) enables the detector (100) to detect a body temperature at a relatively long distance, and a target area is selected through the provided collimator hole (20). This improves detection accuracy. In addition, the collimator hole (20) is used as a structure for screening light. This can decrease a volume of the detector (100), facilitating miniaturization of the detector (100).

## Description

### CROSS-REFERENCE TO RELATED APPLICATIONS

This application claims priority to Chinese Patent Application No. 202011379887.1, filed with the China National Intellectual Property Administration on November 30, 2020 and entitled "DETECTOR AND MOBILE TERMINAL", which is incorporated herein by reference in its entirety.

### TECHNICAL FIELD

This application relates to the field of imaging technologies, and in particular, to a detector and a mobile terminal.

### BACKGROUND

An infrared imaging technology was used for military purpose in earliest time, such as missile guidance and night vision investigation. In recent years, the infrared imaging technology has been gradually developed into a civil field. For example, an infrared sensor is used in a forehead thermometer for non-contact body temperature measurement. Any object, if not being at absolute zero, radiates an electromagnetic wave. A higher temperature indicates a shorter wavelength. When the temperature is higher than 3000 K, a wavelength of the electromagnetic wave is within a visible light wavelength range and is visible to human eyes.

A body temperature ranges from 35°C to 37°C (about 300 K Kelvins). A wavelength of a radiated electromagnetic wave ranges from 8 µm to 12 µm, which is within a far infrared range. Therefore, using the infrared sensor to measure the body temperature means using the sensor to detect an infrared wavelength range of 8 µm to 12 µm.

At present, widely used infrared thermometers are a forehead thermometer, a thermal imager, and the like. The forehead thermometer uses a thermopile sensor, and usually measures a temperature at a short distance of 2 cm. There is no lens, and a cost is low. The thermal imager is similar to a camera used for shooting a photo. It is equipped with a precise optical lens and can shoot a clear infrared photo. Another type of the infrared thermometer is a security check gate system. A temperature measurement method of the security check gate system is similar to that of the thermal imager. Usually, two cameras are equipped: one for shooting a photo under visible light and the other for shooting a photo under infrared light. The two photos shot under the visible light and the infrared light are later combined according to an AI algorithm and processed using other functions. However, in the conventional technology, a detection distance of the forehead thermometer is relatively short, and a structure of the thermal imager is relatively complex. As a result, neither the forehead thermometer nor the thermal imager can be integrated into a thin terminal device.

### SUMMARY

This application provides a detector and a mobile terminal, to implement long-distance infrared temperature measurement and improve miniaturization of the detector.

According to a first aspect, a detector is provided. The detector is configured to implement temperature detection. The detector mainly includes a lens, a collimator hole, and an infrared sensor. The lens, the collimator hole, and the infrared sensor are arranged on an optical path. Light may pass through the lens and the collimator hole and then be irradiated to the infrared sensor. The lens is configured to converge ambient light, and the ambient light includes target area light and another area light. The ambient light, regardless of whether being in a detected area, may be incident into the detector through the lens. The collimator hole is used to obtain the target area light by screening, and block the another area light. To be specific, the collimator hole is used to screen the incident ambient light, and only the target area light can be irradiated to the infrared sensor. The infrared sensor is configured to receive the target area light and block the another area light. In the foregoing technical solution, a convergence function of the lens enables the detector to detect a body temperature at a relatively long distance, and a target area is selected through the provided collimator hole. This improves detection accuracy. In addition, the collimator hole is used as a structure for screening light. This can decrease a volume of the detector, facilitating miniaturization of the detector.

In a specific implementation solution, a ratio of a diameter of the collimator hole to a diameter of an Airy disk is greater than or equal to 0.5, and less than or equal to 3. This ensures effect of screening infrared light and improves detection effect.

In a specific implementation solution, a distance between the collimator hole and the lens may be greater than, equal to, or less than a focal length of the lens. In this way, different distances need to be set based on a detection requirement.

In a specific implementation solution, the detector further includes a calibration sensor and a controller. The calibration sensor is configured to detect an internal temperature of the detector. The controller is configured to calibrate, based on the detector temperature detected by the calibration sensor, an infrared light temperature detected by the infrared sensor. This improves the detection effect of the detector.

When the infrared sensor and the lens are disposed, the infrared sensor and the lens may correspond to each other in different manners. For example, in an optional solution, there are a plurality of infrared sensors, and there are a plurality of lenses. A quantity of lenses is the same as that of infrared sensors, and the lens is in a one-to-one correspondence with the infrared sensor. Alternatively, there are a plurality of infrared sensors and there is one lens. There are a plurality of collimator holes, and the collimator hole is in a one-to-one correspondence with the infrared sensor.

In an optional solution, when there are a plurality of lenses, a first light blocking layer for isolating light is disposed between the plurality of lenses. Crosstalk of light is avoided by using the first light blocking layer. This ensures that light that passes through each lens is not subject to interference.

In an optional solution, when there is one lens, a relative distance between a central axis of the collimator hole and a central axis of the corresponding infrared sensor increases as a distance between the central axis of the corresponding infrared sensor and a central axis of the lens increases. This improves an effect of irradiating the light to the collimator hole.

In an optional solution, a substrate and a package cover are further included. The package cover and the substrate are connected in a sealed manner and enclose space for accommodating an infrared detector. The substrate and the package cover are used as bearing parts to bear the collimator hole and the lens.

In an optional solution, a second light blocking layer is disposed on the package cover, and the collimator hole is provided in the second light blocking layer.

In an optional solution, the lens is a protrusion structure disposed on the package cover. This simplifies a structure of the detector.

In an optional solution, the lens is independently disposed, and the lens may be supported by using a bracket or a housing of a mobile terminal.

In an optional solution, the detector further includes a housing configured to isolate heat from an external environment. The collimator hole and the infrared sensor are located in the housing. This further improves the detection effect.

According to a second aspect, a mobile terminal is provided. The mobile terminal includes a circuit board, and the detector disposed on the circuit board according to any one of the foregoing. The circuit board is electrically connected to an infrared sensor of the detector. In the foregoing technical solution, a convergence function of a lens enables the detector to detect a body temperature at a relatively long distance, and ambient stray light is removed through a provided collimator hole. This improves detection accuracy. In addition, the collimator hole is used as a structure for screening light. This can decrease a volume of the detector, facilitating miniaturization of the detector.

In an optional solution, when the detector includes a controller, the controller is electrically connected to the circuit board.

### BRIEF DESCRIPTION OF DRAWINGS

FIG. 1 is a schematic diagram of an application scenario of a detector;
FIG. 2 is a block diagram of a structure of a detector according to an embodiment of this application;
FIG. 3 is a schematic diagram of a structure of a detector according to an embodiment of this application;
FIG. 4 is a schematic diagram of an application scenario of a detector according to an embodiment of this application;
FIG. 5 is a schematic diagram of a structure of a mobile terminal according to an embodiment of this application;
FIG. 6 is a schematic diagram of a structure of another detector according to an embodiment of this application;
FIG. 7 is a schematic diagram of a structure of another detector according to an embodiment of this application;
FIG. 8 is a schematic diagram of a structure of another detector according to an embodiment of this application;
FIG. 9 is a schematic diagram of a structure of another detector according to an embodiment of this application;
FIG. 10 is a schematic diagram of a structure of another detector according to an embodiment of this application;
FIG. 11 is a schematic diagram of a structure of another detector according to an embodiment of this application;
FIG. 12 is a schematic diagram of a structure of another detector according to an embodiment of this application; and
FIG. 13 is a schematic diagram of a structure of another detector according to an embodiment of this application.

### DESCRIPTION OF EMBODIMENTS

The following further describes embodiments of this application with reference to the accompanying drawings.

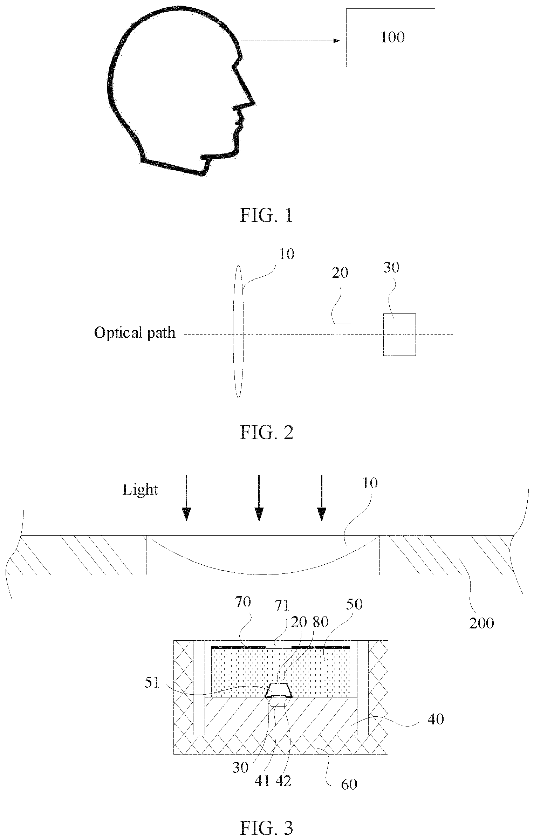

To facilitate understanding of a detector used in embodiments of this application, an application scenario of the detector is first described. The detector provided in embodiments of this application is applied to the field of body temperature detection. FIG. 1 is a body temperature test scenario. A detector 100 faces a forehead of a detected person, and detects a body temperature by detecting a forehead temperature of a human body. In the conventional technology, a forehead thermometer is usually configured to detect the body temperature. However, a detection distance of the forehead thermometer is relatively short, only 1 cm to 3 cm, and a size of the forehead thermometer is relatively large. Therefore, an embodiment of this application provides the detector 100 to increase the detection distance. In this way, the forehead temperature can be measured at a distance of 20 cm to 2 m or even at a longer distance. This implements miniaturization. The following describes the detector in detail with reference to specific accompanying drawings and embodiments.

FIG. 2 is a block diagram of a structure of a detector according to an embodiment of this application. The detector includes a lens 10, a collimator hole 20, and an infrared sensor 30. The lens 10, the collimator hole 20, and the infrared sensor 30 are arranged on an optical path. The collimator hole 20 is located in the middle. The lens 10 and the infrared sensor 30 are located on two sides of the collimator hole 20. Light may pass through the lens 10 and the collimator hole 20 and then be irradiated to the infrared sensor 30. The infrared sensor 30 may convert an optical signal of received infrared light in the light that passes through the lens 10 and the collimator hole 20 into an electrical signal, and determine, based on the electrical signal, a temperature of the received infrared light. A body temperature of a detected person is determined based on the detected temperature of the infrared light.

The lens 10 is configured to converge ambient light, to converge light outside the detector into the detector. The lens 10 may use different types of lenses, provided that light can be converged. For example, the lens 10 may be different types of lenses, such as a double convex lens, a single convex lens, a triangular prism, and a multilateral prism.

The lens 10 does not screen light. Ambient light that passes through the lens 10 includes target area light and another area light. The target area light means an area in which the detected person is located for detection. Refer to the application scenario shown in FIG. 1. When the detector detects a forehead of the detected person, a forehead area of the detected person is a target area, and the light emitted from the forehead is the target area light. The another area light means light in an area other than the target area. For example, there are a first detected person and a second detected person during detection. When the first detected person is detected, light sent by a target area of the first detected person is target area light, and infrared light emitted by the second detected person is another area light. Similarly, when the second detected person is detected, infrared light emitted by the first detected person is another area light.

To ensure a detection accuracy, the another area light should not be irradiated to the infrared sensor 30 during detection. Therefore, the collimator hole 20 is provided on the optical path, so that light in different areas can be selected through the collimator hole 20. It can be learned from the structure shown in FIG. 2 that the collimator hole 20 and the lens 10 form a structure similar to a telescope, and a diameter of the lens 10 is far greater than that of the collimator hole 20. Therefore, when the target area light and the another area light are irradiated to the collimator hole 20, only the target area light can pass through the collimator hole 20, and the another area light cannot pass through the collimator hole 20.

As an optional solution, when the collimator hole 20 is used to obtain the target area light by screening, a ratio of a diameter of the collimator hole 20 to a diameter of an Airy disk is greater than or equal to 0.5, and less than or equal to 3. The Airy disk is a light spot formed at a focal point due to diffraction when a point light source is imaged through limited diffraction. A center of the light spot is a bright round spot, surrounded by a group of weak alternate bright and dark concentric ring strips. The central bright spot bounded by a first dark ring is called the Airy disk.

For example, the ratio of the diameter of the collimator hole 20 to the diameter of the Airy disk is 0.5, 1, 2, 2.5, 3, or the like. When using the foregoing structure, the collimator hole 20 may allow the target area light to pass through and block the another area light.

The infrared sensor 30 is configured to receive infrared light in the target area light, and detect a temperature based on the infrared light. When the infrared sensor 30 receives the target area light that passes through the collimator hole 20, the target area light includes infrared light and ambient stray light. However, during detection, only the infrared light needs to be detected. Therefore, the infrared sensor 30 is used as the detector. The infrared sensor 30 can receive only the infrared light, and does not receive other ambient stray light. This can avoid interference of the ambient stray light. When the infrared light is irradiated to the infrared sensor 30, the optical signal may be converted into the electrical signal by the infrared sensor 30, and the temperature of the detected person may be determined by detecting the electrical signal.

FIG. 3 is a schematic diagram of a structure of a detector according to an embodiment of this application. A lens 10 of the detector may be disposed on a housing or a bracket of a mobile terminal. FIG. 3 shows an example in which the lens 10 is disposed on the housing 200 of the mobile terminal. Ambient light may be incident into the housing 200 through the lens 10.

The detector includes a substrate 40 and a package cover 50. As a bearing structure of an infrared sensor 30, the substrate 40 is configured to bear the infrared sensor 30. It should be understood that a circuit layer is disposed on the substrate 40, and the infrared sensor 30 is electrically connected to the circuit layer of the substrate 40.

The substrate 40 is provided with a first groove 41 used to accommodate the infrared sensor 30. The infrared sensor 30 is disposed in the first groove 41, and is fastened to the substrate 40 by using a cantilever beam 42 that extends into the first groove 41. This reduces contact between the infrared sensor 30 and another structure as much as possible, and avoids interference caused by a temperature of the another structure to the infrared sensor 30.

The package cover 50 covers the substrate 40, and the package cover 50 has one second groove 51. The second groove 51 corresponds to the first groove 41, and they together enclose space for accommodating the infrared sensor 30. In this way, the infrared sensor 30 does not contact the substrate 40 and the package cover 50. In addition, the package cover 50 and the substrate 40 are connected in a sealed manner. During sealing, the space enclosed by the first groove 41 and the second groove 51 is vacuumized to form vacuum packaging. This further reduces interference of convective heat dissipation of gas in the first groove 41 and the second groove 51 to the infrared sensor 30. It should be understood that, to ensure that light that passes through the lens 10 may be irradiated to the infrared sensor 30, the package cover 50 may use a material that allows infrared light to pass through. For example, the material may be silicon, germanium, ZnS, ZnSe, chalcogenide glass, or the like. The silicon material is used as an example. The silicon itself has a relatively good transmittance in an infrared light range with a wavelength of 8 µm to 10 µm.

As an optional solution, an anti-reflective coating may be added to a surface of the package cover. This improves a transmittance of the package cover, and extends a wavelength of the light that passes through to 8 µm to 12 µm or more.

The package cover 50 has a first surface. The first surface is a surface that is of the package cover 50 and that is away from the substrate 40. Light is incident from the first surface into the package cover 50. A second light blocking layer 70 is disposed on the first surface. The second light blocking layer 70 is provided with a first light transmission hole 71. The first light transmission hole 71 is located on an optical path. The light that passes through the lens 10 may be incident into the package cover 50 through the first light transmission hole 71, and light outside the optical path may be blocked by the second light blocking layer 70. In this way, the second light blocking layer 70 may reduce some ambient stray light that is irradiated to the infrared sensor 30 and reduce interference to the infrared sensor 30. The second light blocking layer 70 may be made of a metal material, such as aluminum, nickel, titanium, gold, or copper, or may be made by coating with a light-absorbing material, such as nano carbon black. A diameter of the first light transmission hole 71 may be greater than, equal to, or less than a diameter of the lens 10. This is not specifically limited herein. As an optional solution, the diameter of the first light transmission hole 71 is slightly less than the diameter of the lens 10.

A first light blocking layer 80 is disposed on a side wall of the second groove 51 of the package cover 50. A collimator hole 20 is provided in the first light blocking layer 80. Light in the package cover 50 may pass through the collimator hole 20 and be irradiated to the infrared sensor 30. Target area light is selected through the collimator hole 20. Another area light is absorbed or reflected by the first light blocking layer 80. For example, the first light blocking layer 80 may be made of a metal material, such as aluminum, nickel, titanium, gold, or copper, or may be made by coating with a light-absorbing material, such as nano carbon black.

A ratio of a diameter of the collimator hole 20 to a diameter of an Airy disk is greater than or equal to 0.5, and less than or equal to 3. For example, the ratio of the diameter of the collimator hole 20 to the diameter of the Airy disk is 0.5, 1, 2, 2.5, 3, or the like. When using the foregoing structure, the collimator hole 20 may allow the target area light to pass through and block the another area light.

As an optional solution, the detector further includes a housing 60 configured to isolate heat from an external environment. As shown in FIG. 3, both the substrate 40 and the package cover 50 are located in the housing 60. In addition, the collimator hole 20 and the infrared sensor 30 are located in the housing 60. External heat may be isolated by using the housing 60, to reduce an adverse impact of the external heat on a detection result of the infrared sensor 30. For example, the housing 60 may be made of resin, plastic, or another common material with a relatively low thermal conductivity. As an optional solution, an inner side wall of the housing 60 may be coated with an insulation layer, or the housing 60 is made of an insulation material. This further improves an insulation effect.

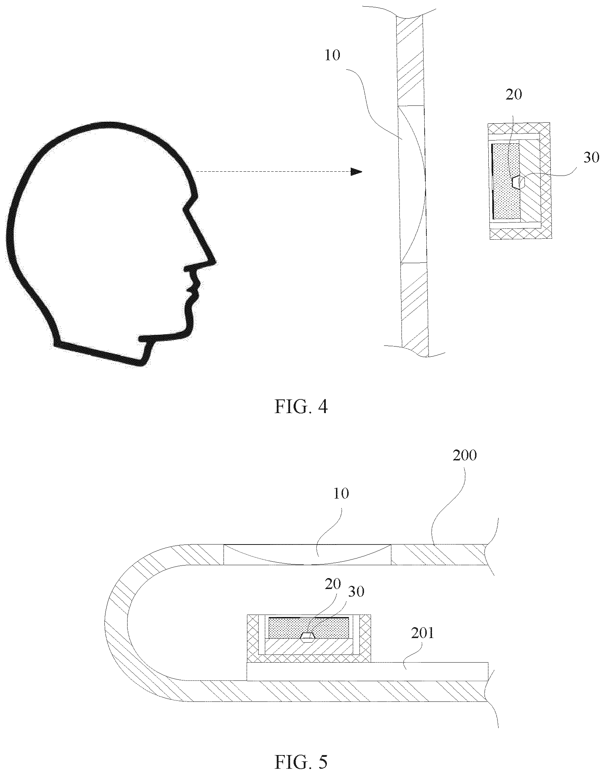

FIG. 4 is a schematic diagram of an application scenario of a detector according to an embodiment of this application. During use, a lens 10 faces a detected person. After passing through the lens 10, infrared light emitted by the detected person may enter an infrared sensor 30 for detection through a collimator hole 20. Although the collimator hole 20 reduces a volume of some entering light, a reduction of a spatial sampling size may improve resolution of a graph and an image. In addition, the collimator hole 20 may enable the detector to detect a longer distance.

FIG. 5 is a schematic diagram of a structure of a mobile terminal according to an embodiment of this application. A detector is disposed in a housing 200 of the mobile terminal, for example, fastened to a structure that can bear a component, such as a bracket 201 or a circuit board, in the housing 200. It can be seen from FIG. 5 that the housing 200 supports a lens 10, and a collimator hole 20 and an infrared sensor 30 are located in the housing. In this way, the detector may be integrated into the mobile terminal with a relatively small size, such as a mobile phone or a tablet computer.

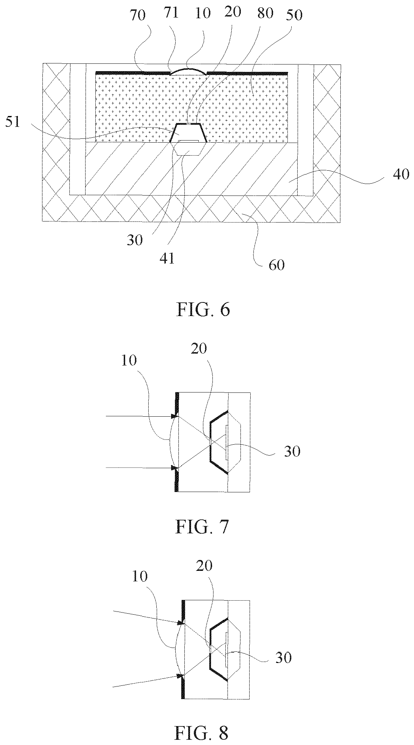

FIG. 6 is a variant structure based on the detector shown in FIG. 3. For some reference numerals in FIG. 6, refer to the same reference numerals in FIG. 3. Details are not described herein again. A lens 10 may be integrated into a package cover 40. As shown in FIG. 6, a part that is of the package cover 40 and that is exposed in a first light transmission hole 71 forms an external arc-shaped protrusion structure that faces the package cover 40. The arc-shaped protrusion structure is used as the lens 10 of the detector, so that the structure of the entire detector is more compact.

When the lens 10 and a collimator hole 20 are specifically provided, a distance d from the lens 10 to the collimator hole 20 may be approximately equal to a focal length f of the lens 10. The distance d may be adjusted based on different design objectives. For example, the distance d between the collimator hole 20 and the lens 10 may be greater than, equal to, or less than the focal length f of the lens 10. The following describes different providing manners with reference to specific accompanying drawings. It should be understood that straight lines with arrows shown in the accompanying drawings represent light at an edge of a detector's receivable range.

FIG. 7 is a schematic diagram when d = f. When d = f, a straight light may be received, to obtain a farthest detection distance. However, a detection range of a detector is relatively narrow.

FIG. 8 is a schematic diagram when d < f. When d < f, an infrared sensor may receive more infrared light to improve a detection rate of a detector. During disposition, a specific field of view of the detector may be designed based on an actual requirement.

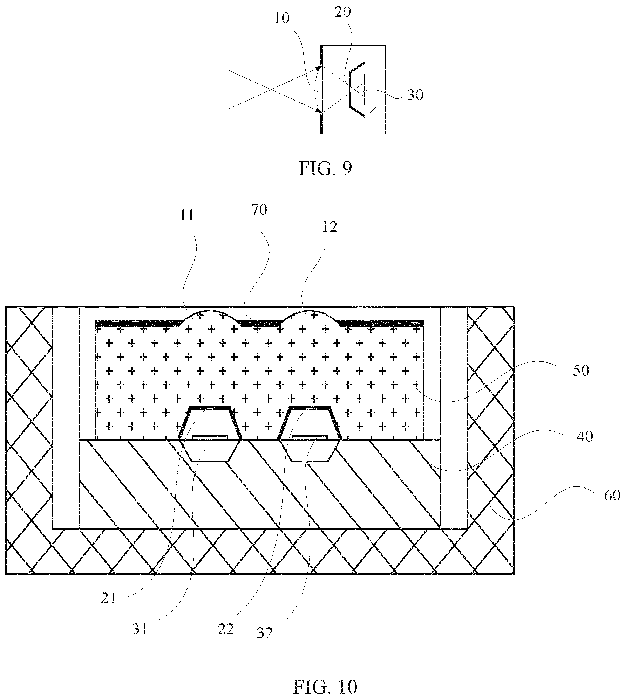

FIG. 9 is a schematic diagram when d > f. When d > f, an infrared sensor can improve resolution of a detector within a specific detection distance range.

FIG. 10 is another variant structure based on the detector shown in FIG. 9. For some reference numerals in FIG. 10, refer to the same reference numerals in FIG. 9. Details are not described herein again. The detector includes a plurality of infrared sensors, and there are a plurality of corresponding lens and collimator holes. There are also a plurality of lenses, and the plurality of lenses are in a one-to-one correspondence with the plurality of infrared sensors. FIG. 10 only shows a first infrared sensor 31 and a second infrared sensor. On an optical path, a first lens 11, a first collimator hole 21, and the first infrared sensor 31 correspond to each other, and a second lens 12, a second collimator hole 22, and the second infrared sensor 32 correspond to each other.

As an optional solution, when there are a plurality of lenses, a second light blocking layer 70 for isolating light is disposed between the plurality of lenses. The second light blocking layer 70 is disposed on a first surface of a package cover 50. When light is irradiated to a lens, crosstalk of light is avoided by using the second light blocking layer 70. This ensures that light that passes through each lens is not subject to interference.

It should be understood that detection areas corresponding to the first lens 11 and the second lens 12 shown in FIG. 10 are the same as a detection area of the infrared sensor shown in FIG. 9.

A quantity of infrared sensors provided in this embodiment of this application is not limited to two as shown in FIG. 10. There may alternatively be three, four infrared sensors, or the like. When a plurality of infrared sensors are used, the plurality of infrared sensors may be arranged in an array, and corresponding collimator holes and lenses are also arranged in an array. In addition, a manner of disposing the plurality of infrared sensors shown in FIG. 10 may also be applied to the structure shown in FIG. 3. When a lens uses an independent structure, a manner of disposing the pluralities of lenses, infrared sensors, and collimator holes may also be used.

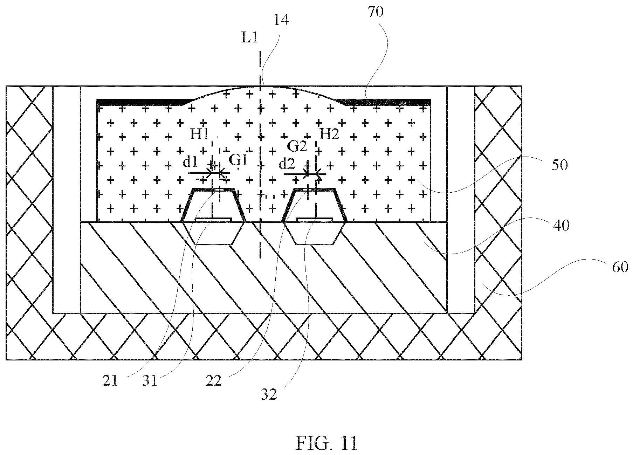

FIG. 11 is a variant structure shown in FIG. 10. For some reference numerals in FIG. 11, refer to the same reference numerals in FIG. 10. In the structure shown in FIG. 11, a first infrared sensor 31 and a second infrared sensor 32 share one third lens 14. A part of light that passes through the third lens 14 is incident into the first infrared sensor 31 through a first collimator hole 21, and a part of light is incident into the second infrared sensor 32 through a second collimator hole 22.

Refer to FIG. 11. The first infrared sensor 31 and the second infrared sensor 32 are separately arranged on two sides of a central axis L1 of the third lens 14. A spacing between a central axis H1 of the first collimator hole 21 and a central axis G1 of the first infrared sensor 31 is d1. A spacing between a central axis H2 of the second collimator hole 22 and a central axis G2 of the second infrared sensor 32 is d2. A distance between d1 and d2 is related to a lens CRA that can be received by the first infrared sensor 31. The first collimator hole 21 and the second collimator hole 22 may be provided based on corresponding lens CRAs that can be received by the first infrared sensor 31 and the second infrared sensor 32. The CRA (Chief Ray Angle, chief ray angle) means a maximum angle of light that can be focused on an infrared sensor from a lens to a side of the infrared sensor.

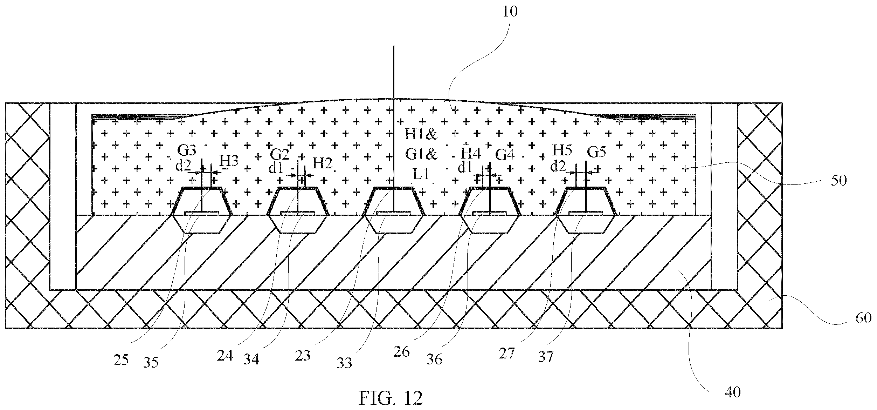

For ease of understanding a correspondence between an infrared sensor and a corresponding collimator hole, refer to a structure of a detector that uses a plurality of infrared sensors shown in FIG. 12.

For some reference numerals in FIG. 12, refer to the same reference numerals in FIG. 10. In the structure shown in FIG. 12, there are a plurality of infrared sensors, and the plurality of infrared sensors are arranged in an array. FIG. 12 shows an example of a manner of arranging one row of infrared sensors in an array. The one row of infrared sensors includes a first infrared sensor 33, a second infrared sensor 34, a third infrared sensor 35, a fourth infrared sensor 36, and a fifth infrared sensor 37. The first infrared sensor 33 to the fifth infrared sensor 37 share one lens 10.

A plurality of collimator holes corresponding to the plurality of foregoing infrared sensors are provided at an offset based on a requirement of a CRA of a corresponding sensor relative to the lens 10. For ease of describing a correspondence between a collimator hole and a corresponding infrared sensor, the following introduces a central axis of the lens 10, a central axis of the infrared sensor, and a central axis of the collimator hole. The infrared sensor and the corresponding collimator hole meet the following condition: A relative distance between the central axis of the collimator hole and the central axis of the corresponding infrared sensor increases as a distance between the central axis of the corresponding infrared sensor and the central axis of the lens increases.

Refer to FIG. 12. A central axis G1 of the first infrared sensor 33 overlaps a central axis L1 of the lens 10. A pair of the second infrared sensor 34 and the third infrared sensor 35, and a pair of the fourth infrared sensor 36 and the fifth infrared sensor 37 are symmetrically arranged on two sides of the first infrared sensor 33.

A central axis H1 of a first collimator hole 23 overlaps the central axis G1 of the first infrared sensor 33 and the central axis L1 of the lens 10. A spacing between a central axis H2 of a second collimator hole 24 and a central axis G2 of a second lens 10 is d1, and a spacing between a central axis H3 of a third collimator hole 25 and a central axis G3 of the third infrared sensor 35 is d2. Correspondingly, a spacing between a central axis H4 of a fourth collimator hole 26 and a central axis G4 of the fourth infrared sensor 36 is d1, and a spacing between a central axis H5 of a fifth collimator hole 27 and a central axis G5 of the fifth infrared sensor 37 is d2. d1 and d2 need to meet the following condition: d2 > d1, to ensure that as a CRA corresponding to a sensor changes, a position of a corresponding collimator hole relative to the infrared sensor also changes. In this way, light that passes through the lens 10 can be irradiated to the infrared sensor.

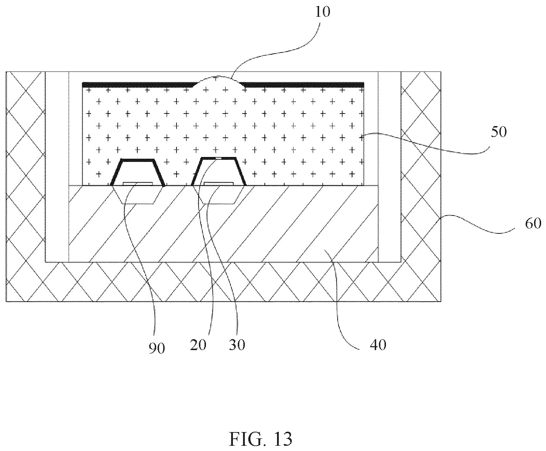

FIG. 13 is a variant structure based on the detector shown in FIG. 9. For some reference numerals in FIG. 13, refer to the same reference numerals in FIG. 3. In addition to the infrared sensor 30, the detector further includes a calibration sensor 90. The calibration sensor 90 is configured to detect an internal temperature of the detector. During disposition, the calibration sensor 90 and the infrared sensor 30 are disposed in a same manner. A substrate 40 is fastened to the calibration sensor 90 by using a cantilever beam, and both the substrate 40 and a package cover 50 are provided with a groove that avoids the calibration sensor 90. In addition, vacuum packaging is also performed on the calibration sensor 90 to ensure detection sensitivity of the calibration sensor 90. During detection, the calibration sensor 90 may detect a temperature inside the detector, and more accurately detect a temperature of the calibration sensor 90. It can be seen from FIG. 13 that the calibration sensor 90 and the infrared sensor 30 are in a same environment. Therefore, the temperature detected by the calibration sensor 90 may also be considered as a temperature of the infrared sensor 30.

The detector further includes one controller. The controller is configured to calibrate, based on the detector temperature detected by the calibration sensor 90, an infrared light temperature detected by the infrared sensor 30. For example, if the temperature detected by the infrared sensor 30 is T1, and the temperature detected by the calibration sensor 90 is T2, the controller may obtain, based on the two detected temperatures, a calibrated temperature T0 = T1 - T2. In this way, the detector may obtain a more accurate calibration temperature.

An embodiment of this application further provides a mobile terminal. The mobile terminal includes a circuit board and the detector disposed on the circuit board according to any one of the foregoing. The circuit board is electrically connected to an infrared sensor of the detector. In addition, when the detector includes a controller, the controller is also electrically connected to the circuit board. In the foregoing technical solution, a convergence function of a lens enables the detector to detect a body temperature at a relatively long distance, and ambient stray light is removed through a provided collimator hole. This improves detection accuracy. In addition, the collimator hole is used as a structure for screening light. This can decrease a volume of the detector, facilitating miniaturization of the detector.

In an optional solution, the mobile terminal further includes a housing. The housing is provided with a light transmission hole. The lens of the detector may be embedded in the light transmission hole. The lens of the detector is supported by the housing. This further reduces a size occupied by the detector in the mobile terminal.

As an optional solution, the detector provided in this embodiment of this application may further work with a front-view camera or a rear-view camera of the mobile terminal. Temperature measurement may be performed with the front-view camera or the rear-view camera to measure the body temperature when taking a selfie, or taking a portrait picture with the rear-view camera.

As an optional solution, the detector may further work with AI (Artificial Intelligence, artificial intelligence) facial recognition of the mobile terminal. When a user unlocks the mobile terminal through AI facial recognition, the mobile terminal may automatically record monitoring data of the user on personal health and body temperature.

The detector provided in this embodiment of this application may be further integrated into the mobile terminal, and work with a distance sensor of a mobile phone. During body temperature detection, distance information of a detected person is detected by using the distance sensor, temperature information of the detected person is detected by using the detector, and temperature measurement data is calibrated based on the collected depth information.

In addition, the detector may further be used for CIS (contact image sensor, scanner) design of visible light image/video shooting, to implement a CIS imaging system without a lens.

It is clearly that a person skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A detector, comprising a lens, a collimator hole, and an infrared sensor that are arranged on an optical path, wherein
the lens is configured to converge ambient light, and the ambient light comprises target area light and another area light;
the collimator hole is used to obtain the target area light by screening, and block the another area light; and
the infrared sensor is configured to receive infrared light in the target area light, and detect a temperature based on the infrared light.

2. The detector according to claim 1, wherein a ratio of a diameter of the collimator hole to a diameter of an Airy disk is greater than or equal to 0.5, and less than or equal to 3.

3. The detector according to claim 1 or 2, further comprising a calibration sensor and a controller, wherein
the calibration sensor is configured to detect an internal temperature of the detector; and
the controller is configured to calibrate, based on the detector temperature detected by the calibration sensor, the infrared light temperature detected by the infrared sensor.

4. The detector according to any one of claims 1 to 3, wherein there are a plurality of infrared sensors, a quantity of lenses is the same as that of infrared sensors, and the lens is in a one-to-one correspondence with the infrared sensor.

5. The detector according to claim 4, wherein a first light blocking layer for isolating light is disposed between every two adjacent lenses.

6. The detector according to any one of claims 1 to 3, wherein there are a plurality of infrared sensors, there is one lens, and there are a plurality of collimator holes, wherein
the collimator hole is in a one-to-one correspondence with the infrared sensor, and a relative distance between a central axis of the collimator hole and a central axis of the corresponding infrared sensor increases as a distance between the central axis of the corresponding infrared sensor and a central axis of the lens increases.

7. The detector according to any one of claims 1 to 6, further comprising a substrate and a package cover, wherein the package cover and the substrate are connected in a sealed manner and enclose space for accommodating an infrared detector.

8. The detector according to claim 7, wherein a second light blocking layer is disposed on the package cover, and the collimator hole is provided in the second light blocking layer.

9. The detector according to claim 7 or 8, wherein the lens is a protrusion structure disposed on the package cover.

10. The detector according to any one of claims 1 to 9, further comprising a housing configured to isolate heat from an external environment, wherein the collimator hole and the infrared sensor are located in the housing.

11. A mobile terminal, comprising a circuit board, and the detector disposed on the circuit board according to any one of claims 1 to 10, wherein the circuit board is electrically connected to an infrared sensor of the detector.

12. The mobile terminal according to claim 11, wherein when the detector comprises a controller, the controller is electrically connected to the circuit board.
